# EUROPEAN PATENT SPECIFICATION

(11) **EP 4 549 715 B1**
(45) Date of publication and mention of the grant of the patent: **19.11.2025**
(21) Application number: 24204408.9
(22) Date of filing: 03.10.2024
(51) Int. Cl.: F02C 3/22, B64D 37/10, B64D 37/30, F02C 7/224

(54) **GAS TURBINE ENGINE**
GASTURBINENTRIEBWERK
MOTEUR À TURBINE À GAZ

(30) Priority: 03.11.2023 GB 202316854
(43) Date of publication of application: 07.05.2025
(73) Proprietor: Rolls-Royce plc, London N1 9FX (GB)
(72) Inventor: Palmer, Chloe J, Derby, DE24 8BJ (GB)
(74) Representative: Rolls-Royce plc

(56) References cited:
- FR-A1- 3 134 848
- GB-A- 833 898
- GB-A- 869 274

## Description

### TECHNICAL FIELD

This disclosure relates to fuel systems for hydrogen-fuelled aircraft propulsion systems, aircraft propulsion systems comprising such fuel systems, and methods of operations of such systems.

### BACKGROUND

In order to limit emissions of carbon dioxide, use of hydrogen as an alternative to hydrocarbon fuel in gas turbine engines has historically only been practical in land-based installations. However, more recently there has been interest in aircraft powered by hydrogen stored at cryogenic temperatures, typically as either a liquid, a compressed gas, or a supercritical fluid.

The document GB 869 274 A shows a fuel system for a hydrogen fuelled aircraft propulsion system according to the prior art.

As the tank is drained during use, the pressure within the tank will fall. In a conventional fuel system, this fuel would be replaced with inert gas such as nitrogen to prevent the pressure from falling below a minimum pressure required for effective pumping and tank structural requirements. However, in a hydrogen tank in which the fuel is stored at low temperatures, such conventional tank pressurisation systems are ineffective as the nitrogen would be liquified at the low temperatures present in the tank where the hydrogen is stored as a liquid, and would mix with the hydrogen fuel where it is stored as a gas. The present invention seeks to provide a fuel system which overcomes these problems.

### SUMMARY

The invention is directed towards a fuel system for a hydrogen fuelled aircraft propulsion system comprising:
a tank configured to store hydrogen;
a first inductor provided within the tank and configured to heat hydrogen fuel within the tank; and
a second inductor provided externally to the tank, and configured to induce a current in the first inductor.

Advantageously, pressure within the liquid hydrogen tank can maintained during operation by heating of the fuel using electrical induction. As such, penetrations into the tank for the purposes of pressurisation are reduced.

At least one of the first inductor and the second inductor may comprise a superconducting material. The superconducting material may comprise a type 2 superconductor such as cuprate, iron based, magnesium diboride, carbon-based or nickelate superconductor.

The fuel system may comprise a controller configured to control heating of fuel in the tank. The controller may be configured to provide one of AC and variable DC current to the second inductor. The controller may be configured to operate the first inductor and second inductor in a charging mode and a heating mode. In the charging mode, the controller may be configured to input current into the second inductor to energise the first inductor to a current density below its critical current density Jc. In the heating mode, the controller may be configured to input current into the second inductor to energise the first inductor to a current density above its critical current density Jc. Accordingly, the controller can control the first inductor to discharge large quantities of heat into the hydrogen tank in a short period of time, by energising the first inductor to a current density above its critical density, wherein the first inductor no longer behaves as a superconductor, and "quenches", releasing its heat into the tank.

The fuel system may comprise a plurality of first and second inductors. The controller may be configured to control a subset of the first and second inductors individually. As such, heat input can be controlled by selectively quenching a subset of second inductors.

The hydrogen tank may be configured to store liquid hydrogen. The hydrogen tank may be configured to store liquid hydrogen at a pressure of between 1 and 4 Bar. The hydrogen tank may be configured to store liquid hydrogen at a temperature below 35 K.

Alternatively, the hydrogen tank may be configured to store compressed or supercritical hydrogen. The tank may be configured to store hydrogen at a temperature below 100 K, and at a pressure up to 350 Bar.

In a second aspect there is provided an aircraft propulsion system comprising a fuel system in accordance with the first aspect, and a propulsor.

The propulsion system may comprise a fuel cell configured to provide electrical power the propulsor.

Alternatively or in addition, the propulsion system may comprise a gas turbine engine configured to drive the propulsor.

The aircraft engine may be configured to drive a generator configured to provide electrical power to the first inductor.

In a third aspect, there is provided a method of operating a fuel system of an aircraft propulsion system comprising:
operating a second inductor located externally to a hydrogen tank to energise a first inductor provided within the tank to thereby heat hydrogen within the tank.

The method may comprise, in a charging mode, inputting current into the second inductor to energise the second inductor comprising a superconducting material to a current density below its critical current density Jc.

The method may comprise, in a heating mode, inputting current into the second inductor to energise the first inductor to a current density above its critical current density Jc to quench the first inductor.

### BRIEF DESCRIPTION OF THE DRAWINGS

An embodiment will now be described by way of example only with reference to the accompanying drawings, which are purely schematic and not to scale, and in which:
Figure 1 shows a hydrogen-fuelled aircraft comprising a hydrogen-fuelled propulsion system;
Figure 2 is a block diagram of a propulsion system for the aircraft of 1igure 1 including a fuel system;
Figure 3 is a block diagram of an alternative propulsion system for the aircraft of figure 1;
Figure 4 is a block diagram of part of the fuel system for the propulsion systems of figure 2 or figure 3, comprising a fuel tank and tank heating system; and
Figure 5 is a flow diagram illustrating a method of use of the fuel system of figures 2 to 4.

### DETAILED DESCRIPTION

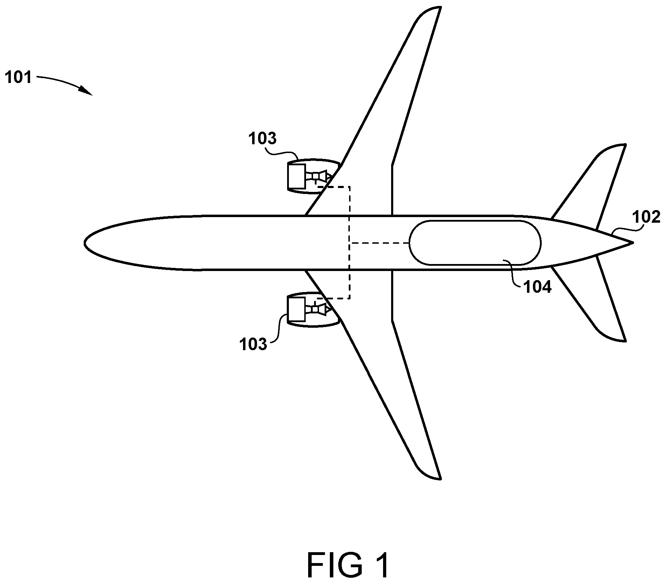

A hydrogen-fuelled airliner is illustrated in Figure 1. In this example, the airliner 101 is of substantially conventional tube-and-wing twinjet configuration with a central fuselage 102 and substantially identical hydrogen powered propulsors 103.

A hydrogen storage tank 104 is located in the fuselage 102. In the present embodiment, the hydrogen storage tank 104 is a cryogenic hydrogen storage tank and thus stores the hydrogen fuel in a liquid state, for example between 20 and 26 kelvin (K), and in a specific example at 25 K. In this example, the hydrogen fuel is pressurised to a pressure from around 1 bar to around 3 bar, in a specific example 2 bar.

In alternative embodiments, the hydrogen storage tank may be configured to store hydrogen in a gaseous or supercritical state, at above ambient pressure. The hydrogen may be cooled to a below ambient temperature for at least part of an operational cycle, and so the tank is configured to store hydrogen at cryogenic temperatures, to increase hydrogen storage density. In one example, the tank 104 is configured to store hydrogen at a pressure up to 350 Bar, and temperatures as low as 50 K, or as high as 400 K.

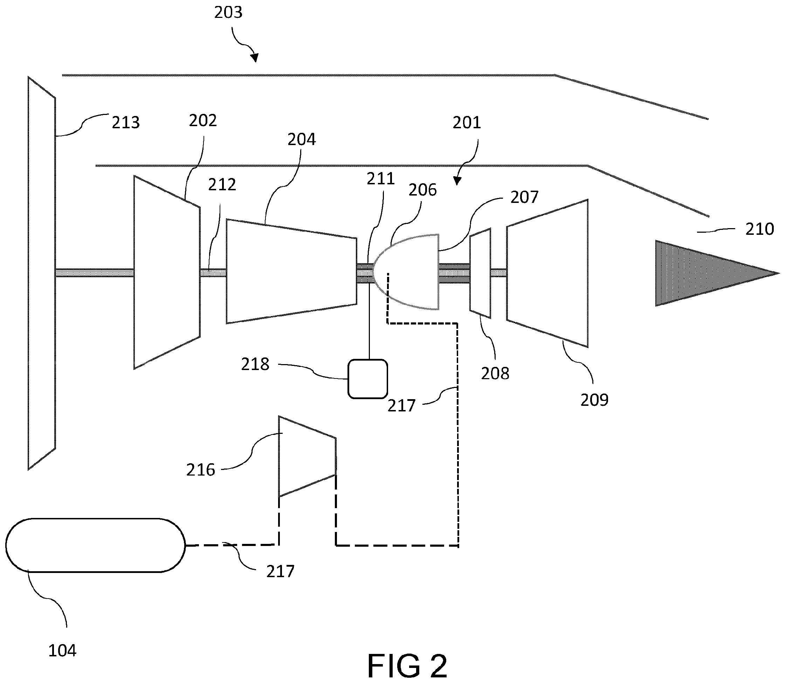

A block diagram of one of the hydrogen powered propulsors in the form of a gas turbine engine 103 is shown in Figure 2, which shows a first fuel system 200 for the engine 103.

The turbofan engine 103 comprises a core gas turbine 201.

The core gas turbine 201 comprises, in fluid flow series, a low-pressure compressor 202, a high-pressure compressor 204, a fuel injection system 206, a combustor 207, a high-pressure turbine 208, a low-pressure turbine 209, and a core nozzle 210. The high-pressure compressor 204 is driven by the high-pressure turbine 208 via a first shaft 211, and the low-pressure compressor 203 is driven by the low-pressure turbine 209 via a second shaft 212. It will be appreciated that in alternative embodiments, the core gas turbine could be of three-shaft configuration.

In operation, the low-pressure turbine 209 drives a fan 213 via shaft 212.

**In** operation, hydrogen fuel is pumped from the hydrogen storage tank 104 by a pump 216 and into a main fuel conduit 217 which ultimately delivers fuel to the fuel injection system 206. The pump 216 may be driven by an electric machine (not shown) or via one or more of the gas turbine engine core shafts 211, 212 via an auxiliary gearbox, or by a turbine powered by heated fuel, exhaust gases from the preheater, or compressed air from the core compressor. The pump provides a "head" of pressure, raising the pressure from the inlet (defined by the pressure conditions upstream of the pump, in particular tank pressure), to a higher pressure at an outlet.

The propulsion system comprises a gas turbine engine driven electrical generator 218, which is typically driven by one of the engine shafts (the high-pressure shaft 211 in the embodiment of figure 2), and is configured to provide electrical power to one or more systems.

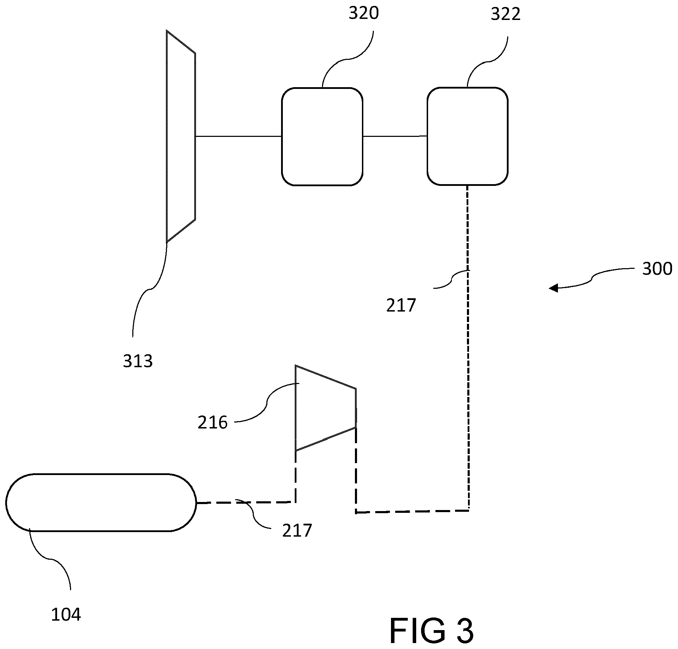

Figure 3 shows an alternative propulsion system 300 for the aircraft 101. In this example, the propulsion system comprises a fan 313 driven by an electric motor 320. The electric motor 320 is in turn energised by electrical power provided from a hydrogen fuel cell 322. The hydrogen fuel cell 322 is provided with fuel by a fuel system 200 which is essentially the same as the system shown in figure 2, and is configured to generate electrical power, which can also be provided to various aircraft systems in addition to the electric motor 320.

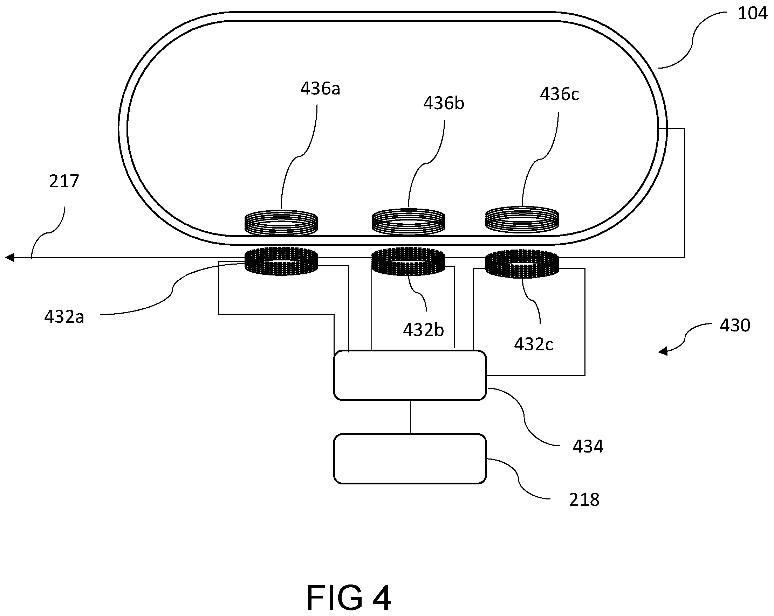

Figure 4 shows part of the fuel system 200 in further detail, comprising a fuel heating system 430.

In operation, fuel is consumed by either the engine 201 or fuel cell 320. In either case, withdrawal of fuel from the tank 104 results in a lower volume of fuel within the tank 104. If this volume is not replaced, the tank pressure will drop. Reduced tank pressure increases the work required by the pump 216 to deliver fuel to the engine 201 or fuel cell 320, and so reduces propulsion system efficiency. This may also increase required pump size (and therefore weight) to provide the required head, and risks cavitation if the pressure drops too far. In extreme cases, a drop in pressure to below ambient pressure may result in damage to the tank. Additionally, rapid pressure fluctuations result in mechanical cycling of the tank 104, which may result in material fatigue and reduced tank life. Accordingly, it is desirable to maintain relatively constant pressure during operation, or at least prevent pressure from dropping below a predetermined level.

The inventors have found that various challenges are encountered when designing a tank pressurisation system. It is desirable to reduce tank penetrations to a minimum, since any penetrations of the tank 104 represent a heat flow path into the tank 104, which can result in uncontrolled heating of the tank contents and reduces storage life. Additionally, any penetration may be difficult to seal, and may result in leaks. Leaks are particularly difficult to avoid in hydrogen storage systems in view of the low molecular size of dihydrogen. Additionally, hydrogen leaks may represent a fire risk.

Accordingly, the present invention provides a system which pressurises the tank, with a minimum of tank penetrations.

The system comprises an induction heating system comprising first 436a-c and second 432a-c inductors. In the present embodiment three second inductors 432a, 432b, 432c are provided. Each second inductor 432a-c comprises a coil of conductive material such as copper, and typically comprises a magnetic core to increase the magnetic field produced by the inductor. Each second inductor 432a-c is electrically coupled to either an Alternating Current (AC) or variable Direct Current (DC) source comprising a controller 434, which is itself coupled to a current source such as the engine electrical generator 218, fuel cell 320, or other suitable power source such as a battery. Where the generator 218 is an AC generator, a rectifier may be provided to convert AC current to DC current. Each second inductor 432a-c is provided adjacent the fuel tank 104, in close proximity to the tank wall, but outside of the tank volume. As such, no penetrations into the tank are required to install the coils 432a-c.

Each second inductor 432a-c is magnetically linked to a respective first inductor 436a-c. Each first inductor 436a-c is installed inside the tank volume, and is arranged to be in thermal contact with hydrogen fuel when the tank 104 is fuelled.

In one embodiment, the first inductors 436a-c are of a similar construction to the second inductors 436a-c, comprising conventional conductive material coils such as copper wound around a magnetic core.

In operation, the controller 434 provides electrical power to the second inductors 432a-c as required in accordance with a tank heating schedule. As will be understood, either AC or DC electrical power having a time varying (e.g. sinusoidal) magnitude provided to the second inductors 432a-c induces a magnetic field, which interacts with the first inductors 436a-c to generate an electrical current in the first inductors 436a-c. This current causes resistive heating in the first inductors 436a-c, which generates heat within the tank 104. Where the tank 104 contains liquid hydrogen, a portion of the hydrogen will vaporise, increasing the pressure in the tank. Similarly, where the tank contains compressed gaseous hydrogen, heating of the hydrogen will again raise the pressure. As such, the inductors 436a-c, 432a-c act as a transformer, providing inductive heating to the tank contents. In some embodiments, the number of turns of the second inductors 432a-c may be higher than the number of turns in the first inductors 436a-c to increase the current in the first inductors 436a-c relative to the second inductors 432a-c, to increase the current in the first inductors 436a-c, thereby increasing resistive heating in the first inductors 436a-c relative to the second inductors 432a-c.

In a further embodiment, which can also be illustrated with reference to figure 4, the construction of the first inductors 436a-c may differ significantly to that of the second inductors 432a-c. In this embodiment, each of the first inductors 436a-c comprises a coil formed of a superconducting material which is capable of superconduction at temperatures and conditions encountered within the hydrogen tank 104 during operation. In the case of a hydrogen tank configured to store liquid hydrogen, temperatures during operation are typically below 25 K.

Suitable superconductor materials include so-called "high temperature" superconductors. Superconductors that do not exhibit the so-called "Meissner effect" (i.e. type 2 superconductors) are most suitable, since these do not repel external magnetic fields, and are more suitable for use as part of a transformer. An additional desirable characteristic is the presence of superconductivity at low pressures, since the pressures encountered in the hydrogen tank will vary, and may be close to 1 atmosphere, and the first inductors 436a-c must be in thermal contact with the hydrogen within the tank 104. A high critical current density (J_{c}) is also desirable. The critical current density is the current density (given in amps per area, e.g. A/mm²) above which superconductivity is lost. Additionally, engineering considerations such as the ability to produce a wire of the material are important.

Table 1 below gives examples of suitable superconductor materials:

| Material name | Chemical Formula | T_{c} (K) | J_{c} |
|---|---|---|---|
| Oxocuprate | Hg₁₂Tl₃Ba₃₀Ca₃₀Cu₄₅O₁₂₇ | 138 | |
| BSCCO | Bi₂Sr₂Ca₂Cu₃O₁₀ | 110 | 5 |
| YBCO | YBa₂Cu₃O₇ | 92 | 8 kA/cm² at 1 Tesla (T) and 36 K^{[1]} |
| | SmFeAsO_{0.85}F_{0.15} | 56 | 10⁵ A/cm² at 45 T and 4.2 K^{[2]} |
| | CeOFeAs | 41 | |
| Magnesium Diboride | MgB₂ | 39 | 300 kA/cm² at 0.5 T, 10 K |
| | La₂₋ₓBaₓCuO₄ | 30 | |

| | | | |
|---|---|---|---|
| [1] - A. Koblischka-Veneva et al., "Comparison of Temperature and Field Dependencies of the Critical Current Densities of Bulk YBCO, MgB2, and Iron-Based Superconductors," in IEEE Transactions on Applied Superconductivity, vol. 29, no. 5, pp. 1-5, Aug. 2019, Art no. 6801805, doi: 10.1109/TASC.2019.2900932. [2] - lida, K., Hänisch, J., Tarantini, C. et al. Oxypnictide SmFeAs(O,F) superconductor: a candidate for high-field magnet applications. Sci Rep 3, 2139 (2013). https://doi.org/10.1038/srep02139. | | | |

As can be seen, any of the above materials listed in Table 1 provide suitable candidates, with MgB₂ being particularly suitable in view of its high J_{C}, low cost, and suitability for drawing into a wire. Additionally, the Tc is relatively close to that of liquid hydrogen storage temperatures, making it easier to quench. YBCO may also be suitable, but may be susceptible to damage during repeated heating and cooling cycles. BSSCO may also be suitable.

As will be understood, while operating as a superconductor (i.e. below its critical temperature, current density and magnetic field), superconducting materials conduct electrical current without any resistive losses. As such, current circulating within the first inductors 436a-c will not generate heat. However, the current can continue to increase by operation of the second inductors 432a-c where energised with time varying DC current (i.e. where the polarity does not reverse), until the critical current density is reached. Once the critical current density is exceeded, the first inductors 436a-c will "quench", i.e. cease to operate as superconductors. Accordingly, the resistivity of the respective inductors 436a-c will increase dramatically, leading to Joule heating, and heat transfer to the hydrogen fuel within the tank 104.

In a modification to this system, the second inductors 432a-c may also comprise superconducting material. In this case, heat generation from the coils outside the tank is minimised, since only heat generation within the tank is desired. Consequently, the efficiency of the system is increased. As shown in figure 4, the second inductors 432a-c may be in thermal contact with hydrogen fuel in the fuel conduit 217, downstream of the tank 104. Consequently, the inductors 432a-c can be kept below their critical temperature in use.

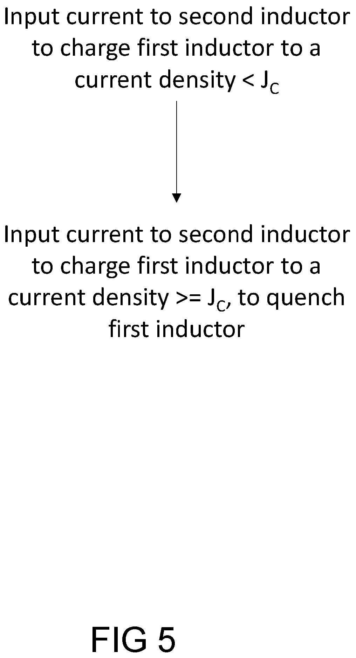

Accordingly, referring to figure 5, a method of operation is defined. In a first mode, the controller 434 operates one or more first inductors 432a-c to generate a current in the second inductors 436a-c. During operation in the first mode, the current in the first inductors 436a-c is maintained below the critical current Jc, such that the first inductors act as superconductors, and substantially no heat is added to the fuel. This mode is referred to as a "charging" mode, since the second inductors 436a-c are energised by the second inductors 432a-c, with no release of energy into the tank 104. Once the critical current density Jc is almost reached, but not exceeded, the controller 434 ceases providing current to the first inductor 432a, and charging ends. Once charged, the first inductors can store current for long periods of time, provided the tank conditions allow for superconductivity.

When addition of heat is required to raise the pressure within the tank 104, a heating mode begins. In the heating mode, additional time varying DC current is applied to the second inductors 432a-c, to increase the current density in the first inductors 436a-c to a value above the critical current density Jc. Accordingly, the first inductors 436a-c are quenched, and heat is released into the tank 104.

In some cases, a subset only of the second inductors 436a-c are quenched during the heating step, to control the quantity of heat added to the tank.

In a third mode, the first inductors 436a-c can be discharged by the provision of time varying DC current to the second inductors 432a-c having a reversed polarity relative to the DC current used in the charging phase. As such, the first inductors 436a-c can be safely discharged without suddenly releasing energy to the hydrogen tank. Such a discharging mode may allow for discharging of the inductors 436a-c prior to warming the tank in between flight cycles, or in the event of an emergency, in which the tank 104 is likely to rapidly warm.

This arrangement provides additional advantages compared to the system in which the first inductors comprise conventional conductors. In this system, large quantities of heat can be added over a short time period, without a requirement for a high power from the controller 434, generator 218 / fuel cell 320, or second inductors 432a-c. As such, each of these systems can be sized for continuous heating requirements, rather than peak heating requirements.

For example, where the propulsion system comprises a gas turbine engine 203, the fuel flow and pressure requirements vary significantly during use. For example, at the beginning of a flight, the tank 104 may contain a relatively small ullage space. As such, a relatively small withdrawal of liquid hydrogen volume may result in a large decrease in tank pressure. At the same time, the volume of the remaining hydrogen is relatively high, and the temperature of the hydrogen is low, and so large quantities of heat may be required to vaporise sufficient hydrogen to replace the liquid hydrogen drained from the tank in view of the heat capacity of the remaining fuel. Furthermore, fuel flows are often greatest during take-off, where power requirements are high.

As such, take-off represents a "corner point", which must be designed for, but which represents a much more challenging design point than the remaining operation. A heating system designed for heating input sufficient for take-off may be very large and heavy. In the present embodiment, the first inductors 436a-c can be charged during start-up and taxi, where fuel flow demands are low, with the first inductors 436a-c being quenched, and providing heat into the tank 104 during take-off.

Accordingly, the invention provides a tank pressurisation system which has weight and power advantages over prior systems, in addition to a reduction in tank penetrations, and so reduced thermal bridging and leakage risk.

Various examples have been described, each of which comprise various combinations of features. It will be appreciated by those skilled in the art that, except where clearly mutually exclusive, any of the features may be employed separately or in combination with any other features.

Modifications could be made to the disclosed arrangement.

For example, the aircraft propulsion system could comprise a hybrid propulsion system, with both a gas turbine engine and a hydrogen fuel cell. In such a system, the gas turbine engine would provide at least one or direct mechanical power and electrical power to drive a propulsor. The fuel cell would provide electrical power to drive either the same, or a separate propulsor to the one driven by the gas turbine engine. Such a system may further comprise electrical energy storage such as a battery.

## Claims

1. A fuel system (200) for a hydrogen fuelled aircraft propulsion system (103) comprising:
a tank (104) configured to store hydrogen;
**characterised by**
a first inductor (436a-c) provided within the tank (104) and configured to heat hydrogen fuel within the tank (104); and
a second inductor (432a-c) provided externally to the tank (104), and configured to induce a current in the first inductor (436a-c).

2. A fuel system according to claim 1, wherein at least one of the first inductor (436a-c) and the second inductor (432a-c) comprises a superconducting material and may comprise a type 2 superconductor such as cuprate, iron based, magnesium diboride, carbon-based or nickelate superconductor.

3. A fuel system according to any of the preceding claims, wherein the fuel system comprises a controller (434) configured to control heating of fuel in the tank (104) and configured to provide one of AC and variable DC current to the second inductor (432a-c).

4. A fuel system according to claim 3 when dependent on claim 2, wherein the controller (434) is configured to operate the first inductor (436a-c) and second inductor (432a-c) in a charging mode and a heating mode

5. A fuel system according to claim 4, wherein, in the charging mode, the controller (434) is configured to input current into the second inductor (432a-c) to energise the first inductor (436a-c) to a current density below its critical current density Jc.

6. A fuel system according to claim 4 or claim 5, wherein, In the heating mode, the controller (434) is configured to input current into the second inductor (432a-c) to energise the first inductor (436a-c) to a current density above its critical current density Jc.

7. A fuel system according to any of the preceding claims, wherein the fuel system comprises a plurality of first and second inductors (436a-c, 432a-c).

8. A fuel system according to claim 7 when dependent on claim 3 or any claim dependent thereon, wherein the controller (434) is configured to control a subset of the first and second inductors (436a-c, 432a-c) individually.

9. A fuel system according to any of the preceding claims, wherein the hydrogen tank (104) is configured to store liquid hydrogen, and wherein the hydrogen tank (104) may configured to store liquid hydrogen at a pressure of between 1 and 4 Bar, and may be configured to store liquid hydrogen at a temperature below 35 K.

10. A fuel system according to any of claims 1 to 9, wherein the hydrogen tank (104) is configured to store compressed or supercritical hydrogen, and wherein the hydrogen tank (104) may be configured to store hydrogen at a temperature below 100 K, and at a pressure up to 350 Bar.

11. An aircraft propulsion system (103) comprising a fuel system (200) in accordance with any of the preceding claims, and a propulsor (213).

12. An aircraft propulsion system according to claim 11, wherein the propulsion system comprises one or more of a fuel cell (322) configured to provide electrical power the propulsor (213), and a gas turbine engine (201) configured to drive the propulsor (213).

13. A method of operating a fuel system (200) of an aircraft propulsion system (103) comprising:
operating a second inductor (432a-c) located externally to a hydrogen tank (104) to energise a first inductor (436a-c) provided within the tank (104) to thereby heat hydrogen within the tank (104).

14. A method according to claim 13, wherein the method comprises, in a charging mode, inputting current into the first inductor (436a-c) comprising a superconducting material to energise the second coil to a current density below its critical current density JC.

15. A method according to claim 13 or claim 14, wherein the method comprises, in a heating mode, inputting current into the second inductor (432a-c) to energise the first inductor (436a-c) comprising a superconducting material to a current density above its critical current density JC to quench the first inductor (436a-c); and, in a heating mode, inputting current into the second inductor (324a-c) to energise the first inductor (432a-c) to a current density above its critical current density Jc to quench the first inductor (436a-c).

## Patentansprüche

1. Brennstoffsystem (200) für ein wasserstoffbetriebenes Luftfahrzeugvortriebssystem (103), umfassend:
einen Tank (104), der dazu konfiguriert ist, Wasserstoff zu speichern;
**gekennzeichnet durch**
einen ersten Induktor (436a-c), der innerhalb des Tanks (104) bereitgestellt ist und dazu konfiguriert ist, Wasserstoffbrennstoff innerhalb des Tanks (104) zu erwärmen; und
einen zweiten Induktor (432a-c), der außerhalb des Tanks (104) bereitgestellt ist und dazu konfiguriert ist, einen Strom in dem ersten Induktor (436a-c) zu induzieren.

2. Brennstoffsystem nach Anspruch 1, wobei mindestens einer von dem ersten Induktor (436a-c) und dem zweiten Induktor (432a-c) ein supraleitendes Material umfasst und einen Typ-2-Supraleiter wie etwa einen Cuprat-, Eisenbasis-, Magnesiumdiborid-, Kohlenstoffbasis- oder Nickelat-Supraleiter umfassen kann.

3. Brennstoffsystem nach einem der vorhergehenden Ansprüche, wobei das Brennstoffsystem eine Steuerung (434) umfasst, die dazu konfiguriert ist, die Erwärmung des Brennstoffs in dem Tank (104) zu steuern, und dazu konfiguriert ist, einen von Wechselstrom und variablem Gleichstrom für den zweiten Induktor (432a-c) bereitzustellen.

4. Brennstoffsystem nach Anspruch 3, wenn abhängig von Anspruch 2, wobei die Steuerung (434) dazu konfiguriert ist, den ersten Induktor (436a-c) und den zweiten Induktor (432a-c) in einem Lademodus und einem Heizmodus zu betreiben.

5. Brennstoffsystem nach Anspruch 4, wobei die Steuerung (434) in dem Lademodus dazu konfiguriert ist, Strom in den zweiten Induktor (432a-c) einzuspeisen, um den ersten Induktor (436a-c) auf eine Stromdichte unterhalb seiner kritischen Stromdichte J_{C} mit Energie zu speisen.

6. Brennstoffsystem nach Anspruch 4 oder Anspruch 5, wobei die Steuerung (434) in dem Heizmodus dazu konfiguriert ist, Strom in den zweiten Induktor (432a-c) einzuspeisen, um den ersten Induktor (436a-c) auf eine Stromdichte oberhalb seiner kritischen Stromdichte J_{C} mit Energie zu speisen.

7. Brennstoffsystem nach einem der vorhergehenden Ansprüche, wobei das Brennstoffsystem eine Vielzahl von ersten und zweiten Induktoren (436a-c, 432a-c) umfasst.

8. Brennstoffsystem nach Anspruch 7, wenn abhängig von Anspruch 3 oder einem davon abhängigen Anspruch, wobei die Steuerung (434) dazu konfiguriert ist, eine Teilmenge der ersten und der zweiten Induktoren (436a-c, 432a-c) individuell zu steuern.

9. Brennstoffsystem nach einem der vorhergehenden Ansprüche, wobei der Wasserstofftank (104) dazu konfiguriert ist, flüssigen Wasserstoff zu speichern, und wobei der Wasserstofftank (104) dazu konfiguriert sein kann, flüssigen Wasserstoff bei einem Druck zwischen 1 und 4 bar zu speichern, und dazu konfiguriert sein kann, flüssigen Wasserstoff bei einer Temperatur unter 35 K zu speichern.

10. Brennstoffsystem nach einem der Ansprüche 1 bis 9, wobei der Wasserstofftank (104) dazu konfiguriert ist, komprimierten oder überkritischen Wasserstoff zu speichern, und wobei der Wasserstofftank (104) dazu konfiguriert sein kann, Wasserstoff bei einer Temperatur unter 100 K und bei einem Druck bis zu 350 bar zu speichern.

11. Luftfahrzeugvortriebssystem (103), umfassend ein Brennstoffsystem (200) nach einem der vorhergehenden Ansprüche und eine Vortriebseinrichtung (213).

12. Luftfahrzeugvortriebssystem nach Anspruch 11, wobei das Vortriebssystem eines oder mehrere von einer Brennstoffzelle (322), die dazu konfiguriert ist, der Vortriebseinrichtung (213) elektrische Leistung bereitzustellen, und einem Gasturbinentriebwerk (201), das dazu konfiguriert ist, die Vortriebseinrichtung (213) anzutreiben, umfasst.

13. Verfahren zum Betreiben eines Brennstoffsystems (200) eines Luftfahrzeugvortriebssystems (103), umfassend:
Betreiben eines zweiten Induktors (432a-c), der sich außerhalb eines Wasserstofftanks (104) befindet, um einen ersten Induktor (436a-c), der innerhalb des Tanks (104) bereitgestellt ist, mit Energie zu speisen, um dadurch Wasserstoff innerhalb des Tanks (104) zu erwärmen.

14. Verfahren nach Anspruch 13, wobei das Verfahren, in einem Lademodus, Einspeisen von Strom in den ersten Induktor (436a-c), der ein supraleitendes Material umfasst, um die zweite Spule auf eine Stromdichte unterhalb ihrer kritischen Stromdichte JC mit Energie zu speisen, umfasst.

15. Verfahren nach Anspruch 13 oder Anspruch 14, wobei das Verfahren, in einem Heizmodus, Einspeisen von Strom in den zweiten Induktor (432a-c), um den ersten Induktor (436a-c), der ein supraleitendes Material umfasst, auf eine Stromdichte oberhalb seiner kritischen Stromdichte JC mit Energie zu speisen, um den ersten Induktor (436a-c) zu quenchen; und, in einem Heizmodus, Einspeisen von Strom in den zweiten Induktor (324a-c), um den ersten Induktor (432a-c) auf eine Stromdichte oberhalb seiner kritischen Stromdichte J_{C} mit Energie zu speisen, um den ersten Induktor (436a-c) zu quenchen, umfasst.

## Revendications

1. Système de carburant (200) destiné à un système de propulsion d'aéronef alimenté en hydrogène (103) comprenant :
un réservoir (104) configuré pour stocker de l'hydrogène ; **caractérisé par** un premier inducteur (436a-c) prévu à l'intérieur du réservoir (104) et configuré pour chauffer le combustible à hydrogène à l'intérieur du réservoir (104) ; et
un second inducteur (432a-c) prévu à l'extérieur du réservoir (104), et configuré pour induire un courant dans le premier inducteur (436a-c).

2. Système de carburant selon la revendication 1, au moins l'un du premier inducteur (436a-c) et du second inducteur (432a-c) comprenant un matériau supraconducteur et pouvant comprendre un supraconducteur de type 2 tel qu'un supraconducteur de cuprate, à base de fer, de diborure de magnésium, à base de carbone ou de nickélate.

3. Système de carburant selon l'une quelconque des revendications précédentes, ledit système de carburant comprenant un dispositif de commande (434) configuré pour commander le chauffage du carburant dans le réservoir (104) et configuré pour fournir l'un d'un courant CA et d'un courant CC variable au second inducteur (432a-c).

4. Système de carburant selon la revendication 3 lorsqu'elle dépend de la revendication 2, ledit dispositif de commande (434) étant configuré pour faire fonctionner le premier inducteur (436a-c) et le second inducteur (432a-c) dans un mode de charge et un mode de chauffage.

5. Système de carburant selon la revendication 4, dans le mode de charge, ledit dispositif de commande (434) étant configuré pour entrer un courant dans le second inducteur (432a-c) pour exciter le premier inducteur (436a-c) à une densité de courant inférieure à sa densité de courant critique Jc.

6. Système de carburant selon la revendication 4 ou la revendication 5, dans le mode de chauffage, ledit dispositif de commande (434) étant configuré pour entrer du courant dans le second inducteur (432a-c) afin d'exciter le premier inducteur (436a-c) à une densité de courant supérieure à sa densité de courant critique Jc.

7. Système de carburant selon l'une quelconque des revendications précédentes, ledit système de carburant comprenant une pluralité de premier et second inducteurs (436a- c, 432a-c).

8. Système de carburant selon la revendication 7 lorsqu'elle dépend de la revendication 3 ou de toute revendication qui en dépend, ledit dispositif de commande (434) étant configuré pour commander un sous-ensemble des premier et second inducteurs (436a- c, 432a-c) individuellement.

9. Système de carburant selon l'une quelconque des revendications précédentes, ledit réservoir d'hydrogène (104) étant configuré pour stocker de l'hydrogène liquide, et ledit réservoir d'hydrogène (104) pouvant être configuré pour stocker de l'hydrogène liquide à une pression comprise entre 1 et 4 bars, et peut être configuré pour stocker de l'hydrogène liquide à une température inférieure à 35 K.

10. Système de carburant selon l'une quelconque des revendications 1 à 9, ledit réservoir d'hydrogène (104) étant configuré pour stocker de l'hydrogène comprimé ou supercritique, et ledit réservoir d'hydrogène (104) pouvant être configuré pour stocker de l'hydrogène à une température inférieure à 100 K, et à une pression allant jusqu'à 350 Bar.

11. Système de propulsion d'aéronef (103) comprenant un système de carburant (200) selon l'une quelconque des revendications précédentes, et un propulseur (213).

12. Système de propulsion d'aéronef selon la revendication 11, ledit système de propulsion comprenant l'un ou plusieurs d'une pile à combustible (322) configurée pour fournir de l'énergie électrique au propulseur (213), et d'un moteur à turbine à gaz (201) configuré pour entraîner le propulseur (213).

13. Procédé de fonctionnement d'un système de carburant (200) d'un système de propulsion d'aéronef (103) comprenant :
le fonctionnement d'un second inducteur (432a-c) situé à l'extérieur d'un réservoir d'hydrogène (104) afin d'exciter un premier inducteur (436a-c) prévu à l'intérieur du réservoir (104) afin de chauffer ainsi l'hydrogène à l'intérieur du réservoir (104).

14. Procédé selon la revendication 13, ledit procédé comprenant, dans un mode de charge, l'entrée d'un courant dans le premier inducteur (436a-c) comprenant un matériau supraconducteur afin d'exciter la seconde bobine à une densité de courant inférieure à sa densité de courant critique JC.

15. Procédé selon la revendication 13 ou la revendication 14, ledit procédé comprenant, dans un mode de chauffage, l'entrée d'un courant dans le second inducteur (432a-c) pour exciter le premier inducteur (436a-c) comprenant un matériau supraconducteur à une densité de courant supérieure à sa densité de courant critique JC pour éteindre le premier inducteur (436a-c) ; et, dans un mode de chauffage, l'entrée d'un courant dans le second inducteur (324a-c) pour exciter le premier inducteur (432a-c) à une densité de courant supérieure à sa densité de courant critique Jc pour éteindre le premier inducteur (436a-c).
